# EUROPEAN PATENT SPECIFICATION

(11) **EP 4 279 425 B1**
(45) Date of publication and mention of the grant of the patent: **26.02.2025**
(21) Application number: 22174272.9
(22) Date of filing: 19.05.2022
(51) Int. Cl.: B65G 57/03, B65G 59/02, B65G 29/00, B65G 47/84, B67C 7/00

(54) **A CONVEYOR FOR TRANSPORTING PIECES IN A PRODUCTION LINE AND AUTOMATIC STORAGE SYSTEM**
FÖRDERER ZUM TRANSPORTIEREN VON TEILEN IN EINER PRODUKTIONSSTRECKE UND AUTOMATISCHES LAGERSYSTEM
CONVOYEUR POUR LE TRANSPORT DE PIÈCES DANS UNE LIGNE DE PRODUCTION ET SYSTÈME DE STOCKAGE AUTOMATIQUE

(43) Date of publication of application: 22.11.2023
(73) Proprietor: Farina, Chiara, 66054 Vasto (CH) (IT); Farina, Roberta, 66054 San Salvo (CH) (IT)
(72) Inventor: Farina, Chiara, 66054 Vasto (CH) (IT); Farina, Roberta, 66054 San Salvo (CH) (IT)
(74) Representative: Bellomia, Paolo

(56) References cited:
- EP-A1- 3 115 305
- DE-A1- 102017 120 083
- US-A- 5 154 315

## Description

The invention relates to a conveyor for transporting pieces in a production line and an automatic storage system comprising the conveyor. The conveyor and the automatic storage system are widely used in production lines of mechanical pieces.

This invention also relates to a method for operating the above-mentioned automatic storage system.

As is known, in the production lines, there are conveyors which are able to interface with one or more machines of the production line to feed these machines and/or to pick up from the latter, respectively, raw pieces or processed pieces. Normally, these conveyors are inserted in storage modules which comprise, in addition to the conveyor, movement means equipped with a pick up head configured to move the pieces to and from the machine.

As is known, depending on the type and size of the pieces to be processed and picked up, the conveyor which manages the pieces has predetermined dimensions and a predetermined arrangement of the internal spaces and the movement means have a configuration where the gripper head is closely linked to the type and size of the pieces to be moved. A prior art conveyor disclosing the preamble of claim 1 is shown in DE 10 2017 120 083 A1.

Disadvantageously, the prior art conveyors and therefore also the prior art storage systems have drawbacks linked mainly to their poor versatility.

Prior art conveyors are normally partitioned and organised to treat a predetermined type of piece. In order perform a size changeover it is necessary to stop the entire production of the line and re-arrange both the conveyor and, more generally, the entire automatic storage system according to new requirements.

This results in lengthy down times during which an operator must intervene manually to reconfigure the storage system based on the new type of pieces to be processed.

The prior art storage systems are therefore not very versatile and are difficult to reconfigure on the basis of the changes in the pieces to be produced. This implies and increase in the management and maintenance costs of the storage system and increase in the time needed to process and manage the pieces.

The technical purpose of the invention is therefore to provide a conveyor, an automatic storage system and a relative operating method which are able to overcome the drawbacks of the prior art.

The aim of the invention is therefore to provide a versatile and reliable conveyor and automatic storage system.

Another aim of the invention is to provide a conveyor that can handle any type of piece to be processed quickly and easily.

A further aim of the invention is to provide a conveyor which is able to actuate a re-configuration automatically on the basis of changes in the type of pieces processed without requiring a reconfiguration of the entire conveyor.

A further aim of the invention is to provide an automatic storage system which is versatile and able to deal with the production rates required.

A further aim of the invention is to provide a method for operating the automatic storage system which is reliable and highly productive.

The technical purpose indicated and the aims specified are substantially achieved by a conveyor, by an automatic storage system and by a method for operating the automatic storage system comprising the technical features described in one or more of the appended claims. The dependent claims correspond to possible embodiments of the invention.

In particular, the technical purpose and aims of the invention are achieved by a conveyor for transporting pieces in a production line comprising a carousel which is rotatable about a vertical axis of rotation and defining a closed feed path for the pieces. The conveyor also comprises a station for feeding raw pieces to a processing machine set up along the closed feed path and a station for collecting the pieces processed by the machine set up along the closed feed path. The conveyor according to the invention also comprises a plurality of units angularly distributed on the carousel and configured for each receiving a stack of raw pieces or a stack of processed pieces. Preferably, the pieces are circular or parallelepiped in shape. Each unit extends along an axis of extension inclined away from and/or towards the axis of rotation and comprises a base plate and a pair of supporting elements.

In particular, the base plate is configured for supporting the bottom of a stack of pieces and is movable along the axis of extension between a position distal from the carousel, in such a way as to release the raw pieces in the feed station, and a position proximal to the carousel for receiving the processed pieces in the collecting station. Preferably, the base plate is movable up and down by a quantity equal to a thickness of the pieces forming the stack. The pair of supporting elements extend, on the other hand, along the axis of extension to define a movement guide for the base plate. In effect, the supporting elements delimit, with the respective base plate, a seat for containing the piece or the stack of pieces and act in conjunction with the base plate to perform a self-centring of the piece or stack of pieces.

Advantageously, the shape of the units and the possibility of self-centring the pieces on them makes the conveyor versatile and usable for any type of pieces without the need to intervene on the conveyor itself to adapt it to the type and dimensions of pieces to be processed.

The invention also relates to an automatic storage system for loading and unloading pieces from a machine. The automatic storage system according to the invention comprises a conveyor as described above, and a supporting frame extending above the conveyor in such a way as to define an operating zone where the collecting station and the feed station are located, and a control zone opposite the operating zone and accessible by an operator.

Preferably, in the control zone, an operator performs, as well as a visual control, an operation for loading new stacks of raw pieces on the units and operations for unloading the stacks of the processed pieces.

The automatic storage system also comprises a gripping arm hinged to the supporting frame and configured for moving a plurality of raw pieces from the feed station to the machine and for moving a plurality of processed pieces from the machine to the collecting station. Preferably, the gripping arm is hinged to the frame at a point lying along the axis of rotation of the conveyor in such a way as to move the pieces between the latter and the machine.

Advantageously, the automatic storage system can be interfaced with any machine of the production line, and in particular, also to machines not equipped with movement arms for loading and unloading the pieces.

Advantageously, the automatic storage system is versatile and adaptable to the movement of any type of piece to and from a machine of a production line.

Advantageously, the automatic storage system can manage any type of part, increasing the production capacity of the entire production line.

The invention also relates to a method for operating an automatic storage system comprising a step of preparing an automatic storage system as mentioned above and a step of preparing a stack of raw pieces on at least one unit of the conveyor passing through the control zone. The method also comprises a step of rotating the conveyor to move the unit into the operating zone and, in particular, in the feed station. Subsequently, the method also comprises a step of picking up, using the gripping arm, a raw piece from the stack to position the raw piece in the machine. Subsequently, the method also comprises the steps of releasing, using the gripping arm, a processed piece from the machine and placing it in a unit positioned in the collecting station. The steps of picking up and releasing are repeated until the unit in the feed station is empty. Subsequently, the method comprises a step of again rotating the conveyor in such a way that the empty unit occupies the collecting station and a new unit, transporting a stack of raw pieces, enters the feed station.

Advantageously, the operating method of the automatic storage system is fast and reliable since it allows the simultaneous management of raw pieces and processed pieces.

Further features and advantages of the invention are more apparent in the nonlimiting description which follows of a non-exclusive embodiment of a conveyor, an automatic storage system and a method of operation of the latter.

The description is set out below with reference to the accompanying drawings which are provided solely for purposes of illustration without restricting the scope of the invention and in which:
- Figure 1 is a top view of the conveyor according to the invention;
- Figure 2 is a perspective view of a conveyor according to the invention, interfacing with a machine of known type of a production line;
- Figures 3A and 3B are, respectively, a cross section and a top view of a detail of the conveyor of Figure 1;
- Figure 4 is a perspective view of an automatic storage system comprising the conveyor of Figure 1;
- Figures 5A-5C are, respectively, two side views and a top view of the operation of a gripping arm of the automatic storage system of Figure 4.

With reference to the accompanying drawings, the numeral 100 denotes a conveyor for transporting pieces in a production line. More in detail, the conveyor 100 is configured to move raw pieces close to a processing machine "M" of the production line and to receive the pieces just processed from the machine "M" in such a way as to move them away from it towards a subsequent processing station of the production line or towards an unloading zone in which they are removed from the conveyor 100.

The conveyor 100 comprises a carousel 1 rotatable about a vertical axis of rotation "X". The carousel 1 defines a closed feed path "C" for the pieces along which the raw pieces and the processed pieces are moved as described below.

Preferably, the carousel 1 has a circular cross-section and the closed feed path "C" is therefore a circular path.

Alternatively, the closed feed path "C" may be square or rectangular. In this situation, the carousel 1 could be replaced by a conveyor belt.

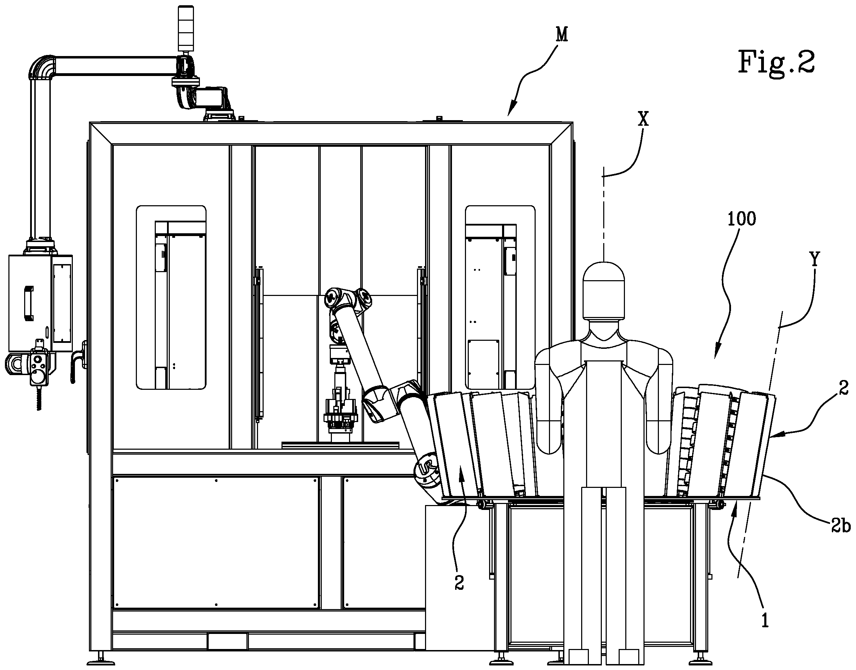

As shown in Figure 2, the conveyor 100 is configured to interface with a known processing machine "M" in such a way as to feed to the machine "M" a plurality of raw pieces and receive from it a plurality of processed pieces.

The conveyor 100, according to the invention, also comprises a station "A" for feeding the raw pieces to the processing machine "M", set up along the closed feed path "C", and a station "R" for collecting the processed pieces which is also set up along the closed feed path "C" wherein the processed pieces are positioned from the machining machine "M" to the conveyor 100.

In other words, the conveyor 100 is set up close to a processing machine "M" and is configured to rotate about its own axis of rotation "X" in such a way as to feed, in the feed station "A", a plurality of raw pieces to the processing machine "M" of the production line and to receive, in the collecting station "R", the above-mentioned pieces processed by the processing machine "M".

Preferably, as shown in Figure 2, the conveyor 100 can be associated with a processing machine "M" equipped with means for picking up the raw pieces and the processed pieces in such a way that the pickup means interface the feed station "A" and the collecting station "R" to pick up and release, respectively, the raw pieces and the processed pieces to the conveyor 100.

Alternatively, the picking up of the raw pieces from the feed station "A" and the release of the processed pieces in the collecting station "R" could be performed manually by an operator.

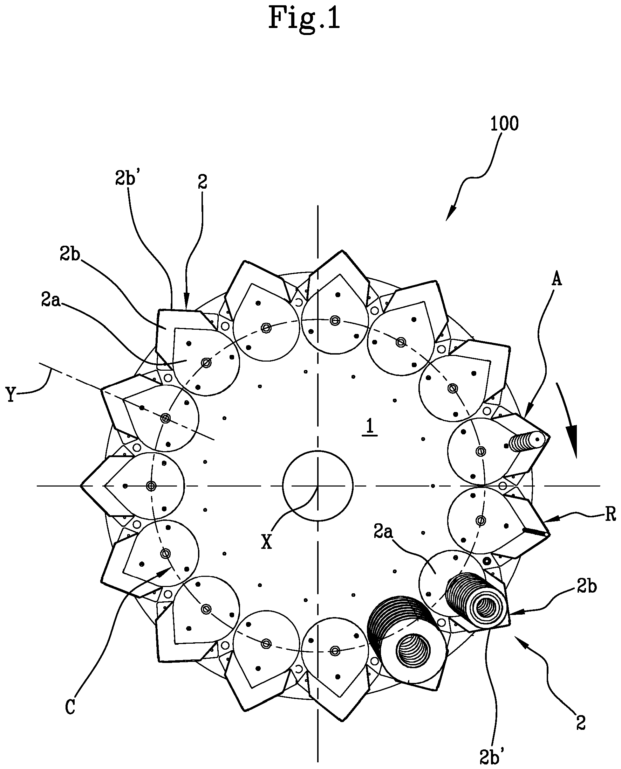

As shown in Figure 1, for transporting and moving the raw pieces and the processed pieces to and from the processing machine "M", the conveyor 100 comprises a plurality of units 2 angularly distributed on the carousel 1 and each configured for receiving a stack of raw pieces or a stack of processed pieces.

Preferably, the pieces forming a stack located on a unit 2 are pieces of the same type whilst different units 2 can receive stacks of different pieces. For example, a unit 2 can receive a stack of pieces having a predetermined diameter whilst a further unit 2 can receive a stack of pieces having a larger diameter. Alternatively, a unit 2 may, for example, receive a stack of pieces with a circular cross-section and a further unit 2 receive a stack of pieces with a square cross-section.

Preferably, the raw pieces and the processed pieces generally have a circular shape or a parallelepiped shape.

Each unit 2 extends along an axis of extension "Y" inclined away from and/or towards the axis of rotation "X".

According to the embodiment illustrated in the accompanying drawings, in particular in Figure 2, the axis of extension "Y" of each unit 2 is inclined away from the axis of rotation "X" and the units 2 extend towards an outer edge of the carousel 1.

Alternatively, the axis of extension "Y" may be inclined towards the axis of rotation "X" in such a way that the units 2 extend towards the centre of the carousel 1 and are thus mirrored relative to the units 2 shown in the accompanying drawings.

According to a further possible embodiment (not illustrated), some units 2 have an axis of extension "Y" inclined towards the axis of rotation "X" whilst some units 2 have an axis of extension "Y" inclined away from the axis of rotation "X".

Preferably, the axis of extension "Y" has an inclination of between 5° and 15°, even more preferably the inclination is approximately equal to 10°.

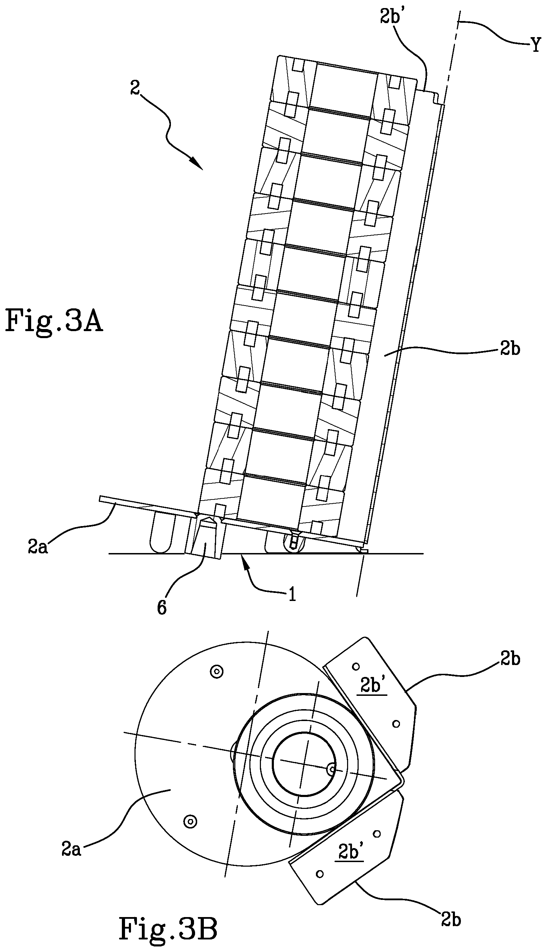

As shown in Figures 1, 3A and 3B, each unit 3 comprises a base plate 2a configured for supporting the bottom of a stack of pieces. The base plate 2a is movable along the axis of extension "Y" between a position distal from the carousel 1, in such a way as to release the raw pieces in the feed station "A", and a position proximal to the carousel 1 for receiving the processed pieces in the collecting station "R", as described in detail below.

Preferably, the base plate 2a is movable up and down by a quantity equal to a thickness of the pieces forming the stack.

Even more preferably, the base plate 2a is movable by means of a lift unit 6 of the electric motor or other type (for example, pneumatic, hydraulic, etc.).

Each unit 2 also comprises a pair of supporting elements 2b extending along the axis of extension "Y" to define a movement guide for the base plate 2a. The supporting elements 2b delimit with the respective base plate 2a a seat for containing the piece or the stack of pieces and act in conjunction with the base plate 2a to perform a self-centring of the piece or stack of pieces positioned inside the unit 2.

According to the embodiment illustrated in the accompanying drawings, each unit 2 has the axis of extension "Y" inclined away from the axis of rotation "X" and therefore has the supporting elements 2b directed towards an outer edge of the carousel 1. In this situation, when the conveyor 100 is moving the falling of the pieces or entire stacks of pieces from the respective units 2 is prevented.

Alternatively, all the units 2 or some of them may have the axis of extension "Y" inclined towards the axis of rotation "X". In this situation, the supporting elements 2b are directed towards the centre of the carousel 1, making access to the base plate 2a easier, in such a way as to facilitate the loading and/or picking up of the stacks of pieces from the units 2.

In other words, each unit 2 of the carousel 1 of the conveyor 100 is configured to receive a piece or a stack of pieces in such a way that the latter are supported on the base plate 2a and rest on the pair of supporting elements 2b in such a way as to perform a self-centring on the respective unit 2.

In more detail, as shown in Figure 3A, in order to perform the self-centring of the stack of pieces, the base plate 2a is perpendicular to the supporting elements 2b and inclined with respect to the carousel 1. In this situation, when a piece of the stack is positioned on the unit 2, it slides towards the pair of supporting elements 2b in such a way as to rest on them at least in two points (Figure 3B) and self-centre.

Preferably, the supporting elements 2b of the pair define a predetermined angle to each other, in particular, the supporting elements 2b define an angle of between 60° and 120°, even more preferably approximately equal to 90°.

In this situation, at the moment of positioning the piece on the unit 2, the base plate 2a transfers, thanks to its inclination, the piece towards the supporting elements 2b in such a way that the piece is inserted in the space delimited between them (Figure 3B).

According to the preferred embodiment of Figure 3B, the base plate 2a has, in cross section, a substantially drip-type shape wherein a tip portion of the drip is at least partly received by the pair of supporting elements 2b in such a way as to form two contact points for each piece of the stack of pieces resting on the base plate 2a. In this situation, once the stack of pieces is positioned on the unit 2, it is possible to determine in a unique and precise manner a position of the centre of the stack of pieces relative to the axis of extension "Y". This feature is particularly useful for the moment of picking up or releasing the stack of pieces on the units 2, as described in detail below.

Advantageously, the possibility of performing a self-centring of the pieces inserted in the units 2 speeds up the operations for picking up and releasing the pieces.

Advantageously, the possibility of performing a self-centring of the pieces inserted in the units 2 allows the conveyor 100 to insert any type of pieces inside the units 2 since there is no need to vary in any way the components of the conveyor 100.

In use, an operator or an automatic machine positions in one or more units 2 a stack of raw pieces in such a way that the latter are positioned on top of each other. Preferably, at the moment of inserting the stack of raw pieces, the base plate 2a of the unit 2 is in a proximal position in such a way that the operator can rest on it a number of raw pieces such that the last piece of the stack is close to an upper edge 2b' of the pair of supporting elements 2b (Figure 3A).

Alternatively, if the number of pieces is not such as to fill the unit 2, the base plate 2a of the unit 2 may be partly raised, and therefore occupy an intermediate position between the proximal position and the distal position in such a way that the last piece of the stack is in any case close to an upper edge 2b' of the pair of supporting elements 2b.

At the moment of insertion of the stack inside the unit 2, the base plate 2a carries, thanks to its inclination, the stack of raw pieces to abut against the supporting elements 2b to perform a self-centring. Subsequently, the conveyor 100 is rotated and the stack of raw pieces is conveyed into the feed station "A" where the upper raw piece is released to the processing machine "M". In this situation, the base plate 2a is moved along the axis of extension "Y" upwards, and in particular, it is raised by an amount equal to the thickness of the raw piece picked up in such a way as to raise the entire stack, moving a second raw piece close to the upper edge 2b' of the pair of supporting elements 2b. When the machine "M" has processed the piece, the processed piece is positioned in the collecting station "R" where there is an empty unit 2 the base plate 2a of which is in the distal position to receive the processed piece. In this situation, the base plate 2a is just below the upper edge 2b' of the pair of supporting elements 2b, in particular, it is located at a distance from the upper edge 2b' equal to the thickness of the processed piece to be received. In this situation, the processed piece is placed on the base plate 2a and is self-centred. Subsequently, the base plate 2a lowers, preferably by an amount equal to the thickness of the piece processed by the machine "M", in such a way as to allow the receiving inside the unit 2 of a further processed piece at the outfeed of the machine "M".

The operations of raising the base plate 2a of the unit 2 in the feed station "A" and the operations of lowering the base plate 2a of the unit 2 in the collecting station "R" continue until the raw pieces of the stack in the feed station "A" are finished. In this situation, in the feed station "A" the unit 2 is empty and the base plate 2a is in the distal position, whilst, in the collecting station "R", the unit 2 is full and the base plate 2a is in the proximal position.

Subsequently, the conveyor 100 rotates and the unit 2, now empty, in the feed station "A" passes to the collecting station "R" whilst, the unit 2 which was previously in the collecting station "R" and which is now filled with processed pieces, proceeds along the closed feed path "C".

According to the preferred embodiment, the conveyor 100 also comprises a control unit (not illustrated) configured for controlling the units 2 by moving the base plate 2a between the distal position and the proximal position and vice versa as a function of an operating parameter of a specific unit 2 passing through the feed station "A" and/or through the collecting station "R".

Preferably, the control unit is also configured to acquire data relating to the shape and/or size (for example, the diameter) of the type of piece to be processed and to process this data in such a way as to derive information relating to the distance of a centre of the piece or stack of pieces with respect to the axis of extension "Y" of the unit 2 containing the stack.

According to the preferred embodiment, the data relating to the shape and/or size of the type of piece is entered by an operator. Alternatively, the data may be acquired by using sensors.

Preferably, the conveyor 100 also comprising a plurality of measuring devices 3 designed to detect the operating parameter of the specific unit 2 and to generate a signal representing the operating parameter to be sent to the control unit. In particular, the operating parameter can be selected from a number of pieces of the stack, and/or a thickness of the pieces of the stack.

In other words, the measuring devices 3 are activated each time a new unit 2 passes through the feed station "A" and/or into the collecting station "R". In this situation, the measuring devices 3 measure the operating parameters linked to the raw pieces to be processed and/or the processed pieces in such a way as to raise or lower the base plate 2a of the unit 2 in the feed station "A" and of the unit 2 in the collecting station "R".

According to the preferred embodiment, when a unit 2 passes in the feed station "A", the measuring devices 3 acquire the operating parameter relative to the number of raw pieces present in the stack and the operating parameter relative to their thickness. In this way it is possible to control both the number of lifts of the base plate 2a of the unit 2 in the feed station "A" to ensure that all the raw parts are processed by the machine "M" and the number of lowerings of the base plate 2a of the unit 2 in the collecting station "R" to receive the pieces processed.

Thanks to the measuring devices 3, together with the number of lifts and lowerings of the base plates 2a of the units 2 in the feed station "A" and in the collecting station "R", it is also possible to control the stroke of these lifts and lowerings on the basis of the thickness of the pieces to be processed.

In order to prevent the conveyor 100 from blocking if there is no stack of pieces on the unit 2 passing through the feed station "A", the measuring devices 3 also detect an operating parameter relating to the presence or absence of the stack of pieces on the unit 2.

Advantageously, the presence of the measuring devices 3 makes it possible to speed up and render more efficient the operations for picking up and releasing the pieces from the conveyor 100.

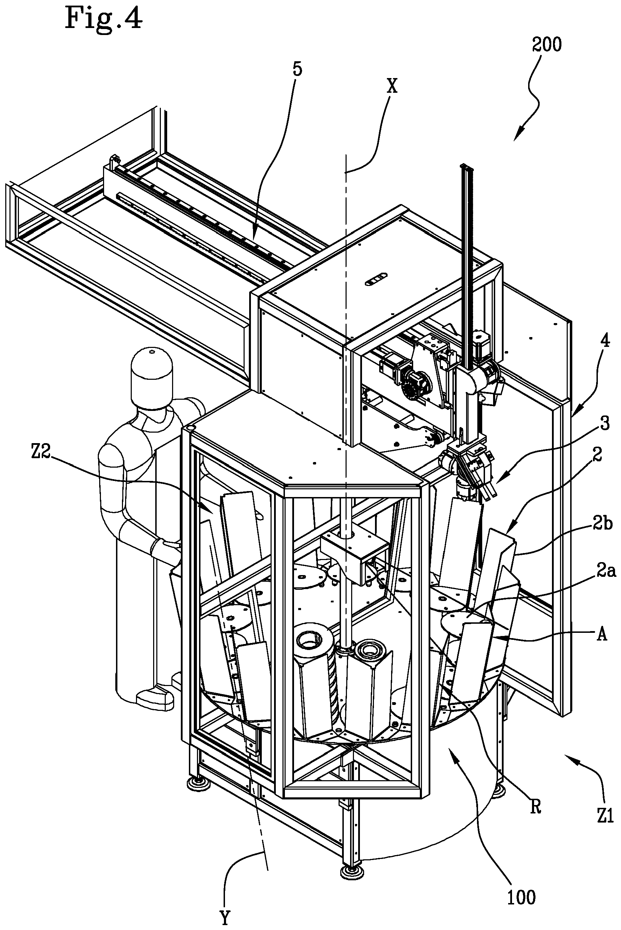

This invention also relates to an automatic storage system 200 for loading and unloading pieces to/from a machine "M" (not illustrated in Figure 4) comprising a conveyor 100 as described above and a supporting frame 4 extending above the conveyor 100 in such a way as to define an operating zone Z1 facing a machine "M" of a production line, where there are the feed station "A" and the collecting station "R", and a control zone Z2, opposite the operating zone Z1 and accessible by an operator.

Preferably, the automatic storage system 200 comprises detection means (not illustrated) configured to detect the presence or absence of an operator in the control zone Z2 in such a way as to inhibit or enable a rotation of the conveyor 100.

In effect, in use, if an operator is close to the control zone Z1 to operate on the conveyor 100 (Figure 4), for example to load the raw pieces on the units 2 and/or to unload the processed pieces from the units 2, the detection means send a signal to the control unit of the conveyor which inhibits the rotation of the conveyor 100. Advantageously, the presence of the detection means makes the use of the automatic storage system 200 by an operator safer.

As shown in Figure 4, the automatic storage system 200 also comprises a gripping arm 5 hinged to the supporting frame 4 and preferably hinged at a point lying along the axis of rotation "X" of the conveyor 100.

The gripping arm 5 is configured for moving a plurality of raw pieces from the feed station "A" to the processing machine "M" and for moving a plurality of processed pieces from the processing machine "M" to the collecting station "R".

Preferably, the gripping arm 5 can be moved on the basis of the information relating to the shape and/or the dimensions of the pieces present in the conveyor 100 acquired by the control unit in such a way as to pick and release the pieces of any type in a precise and fast manner.

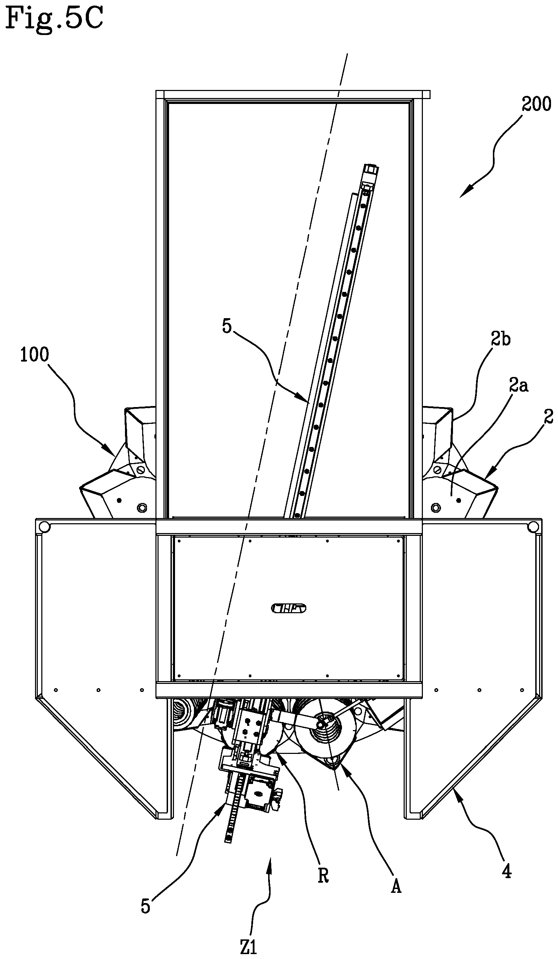

In particular, as shown in Figure 5C, the gripping arm 5 is movable between the collecting station "R" and the feed station "A" and vice versa in such a way as to pick up a raw piece from the feed station "A" and release the piece, once processed by the processing machine "M", into the collecting station "R".

Preferably, the gripping arm 5 is movable between the stations "A", "R" by means of a rotational motion about the hinge point of the gripping arm 5 with the supporting frame 4.

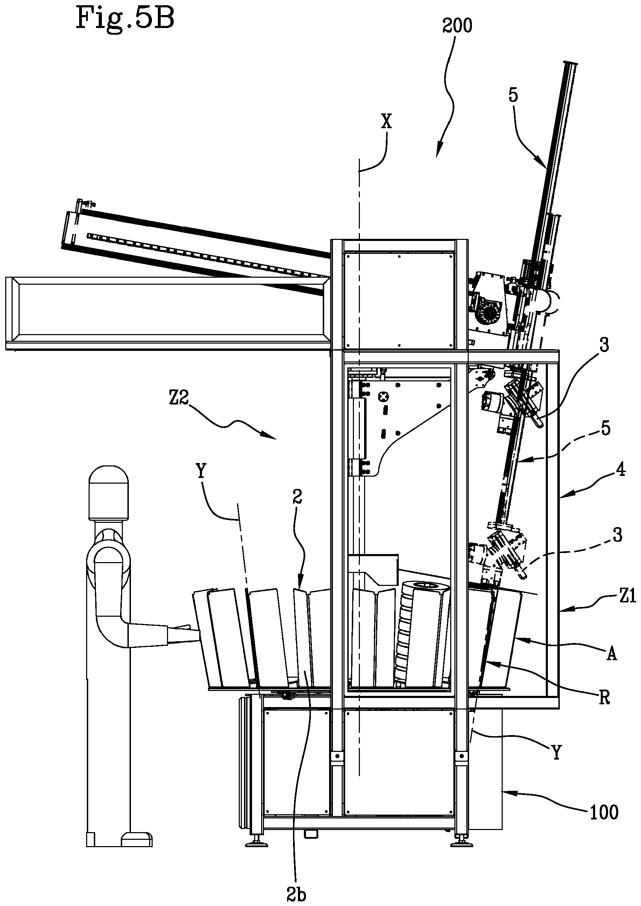

As shown in Figure 5B, the gripping arm 5 is also movable with a tilting motion between an operating position (dashed lines) in which it is aligned along the axis of extension "Y" and moved towards the unit 2 for manipulating the raw pieces or processed pieces, and a rest position in which it is moved away from the conveyor 100 (continuous lines).

More in detail, the gripping arm 5 is in the operating position at the moment of picking up the raw pieces from the unit 2 in the feed station "A" and at the moment of releasing the processed pieces on the unit 2 in the collecting station "R", whilst it is in the rest position at the moment of rotation of the conveyor 100, that is to say, when the unit 2 in the feed station "A" is completely emptied and that in the collecting station "R" is full.

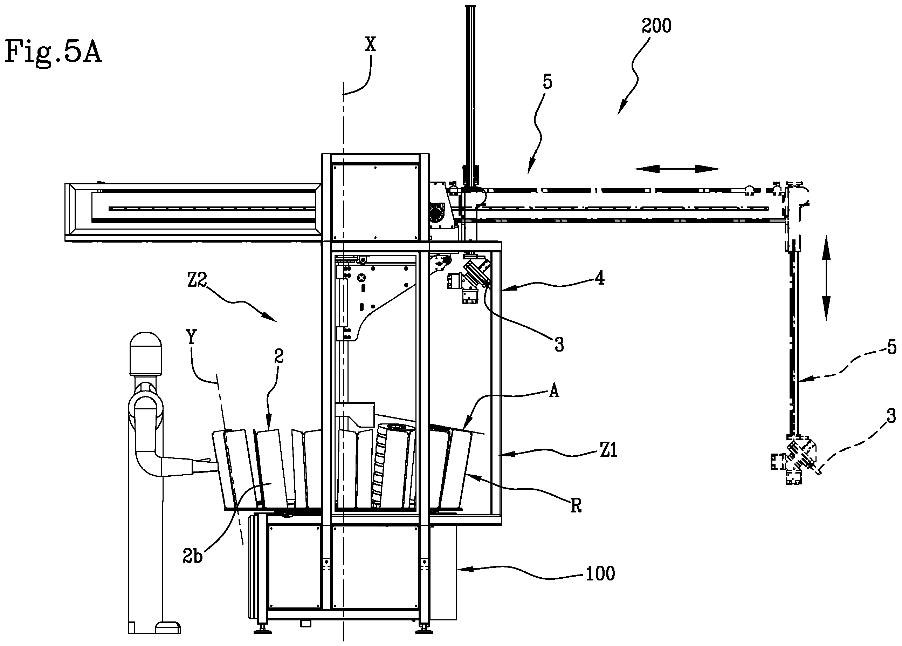

According to the preferred embodiment, the gripping arm 5 is also movable, as shown in Figure 5A, translationally along a direction parallel to the axis of rotation "X" of the conveyor 100 between an extracted position (dashed line), in which it is close to the conveyor 100, and a retracted position (continuous line), in which it is close to an upper portion of the supporting frame 4. Preferably, the gripping arm 5 is also movable translationally along a direction transversal to the axis of rotation "X" of the conveyor 100 in such a way as to be able to move the raw piece picked up from the feed station "A" towards the machine "M" and in such a way as to move the processed piece from the machine "M" to the collecting station "R".

Advantageously, the great mobility of the gripping arm 5 makes the latter able to quickly and easily control the movement of the raw parts and the processed pieces between the feed station "A" and the collecting station "R".

In use, therefore, in order to pick up a raw piece from the feed station "A", the gripping arm 5 is translated along the direction parallel to the axis of rotation "X" up to a height just above the unit 2 in the feed station "A". Subsequently, the gripping arm 5 swings in such a way as to pass from the rest position to the operating position to incline and position along the direction of extension "Y" of the unit 2. In this situation, the gripping arm 5 is further lowered until coming into contact with the raw piece to be picked up. Once the raw piece has been engaged, the gripping arm 5 is lifted along the direction of extension "Y" until it comes out of the space occupied by the unit 2. In this situation, the gripping arm 5 translates along the direction transversal to the axis of rotation "X" to move the raw piece to the processing machine "M".

After completing the processing on the piece, the gripping arm 5 is retracted along the above-mentioned direction transversal to the axis of rotation "X" in such a way as to position the piece close to the conveyor 100. In this situation, the gripping arm 5 is oriented towards the collecting station "R" to release the processed piece, repeating the same translational and tilting movement performed to pick up the raw piece.

The above-mentioned movement of the gripping arm 5 is repeated until the raw pieces of the unit 2 in the feed station "A" have all been processed by the processing machine "M".

This invention also relates to a method for operating an automatic storage system 200. The method comprises the steps of preparing an automatic storage system 200 as described above and preparing at least one stack of raw pieces on at least one unit 2 passing through the control zone "Z2". During the step of preparing the stack of raw pieces, the conveyor 100 is stationary since the detection means detect the presence of the operator and inhibit the rotation of the conveyor 100. In this situation, when the operator positions the stack of raw pieces on at least one unit 2, the stack is self-centred on the unit 2 thanks to the cooperation of the base plate 2a in the proximal position and of the pair of supporting elements 2b. In this situation, thanks to the shape of the pair of supporting elements 2b it is not necessary to manually centre the stack of pieces on the units 2. According to the preferred embodiment, the method also comprises a step of inserting data relating to the shape and/or the dimensions of the type of pieces of the stack just loaded on the unit 2. In this situation, the processing unit is able to derive the measurement of a distance of the centre of the stack of pieces from the axis of extension "Y" of the unit 2.

Subsequently, the method comprises the steps of rotating the conveyor 100 to move the unit 2 to the operating zone "Z1" in such a way as to move the unit 2 to the feed station "A" and picking up, using the gripping arm 5, a processed piece from the stack in order to position the raw piece in the machine "M".

In the picking up step, since the stack of pieces on the unit 2 self-centres thanks to the shape of the base plate 2a and the pair of supporting elements 2b and since the distance of its centre from the axis of extension "Y" is known thanks to the control unit, the gripping arm 5 performs a precise and fast picking up. Thanks to the information relating to the distance between the axis of extension "Y" and the centre of the stack of pieces, the control unit is able to control the movement of the gripping arm 5 in a precise and accurate manner whatever the type of pieces processed.

When the raw piece of the stack is picked up by the gripping arm 5, the base plate 2a of the unit 2 is lifted in such a way as to prepare a further raw piece close to an upper edge 2b' of the supporting members 2b and then picked up by the gripping arm 5.

Subsequently, the method comprises the step of picking up with the gripping arm 5 a processed piece from the machine "M" and releasing the piece in a unit 2 positioned in the collecting station "R". In this situation, the unit 2 in the collecting station "R" has the base plate 2a raised towards the distal position in such a way as to receive the processed piece. Once the processed piece has been positioned, the base plate 2a is lowered in such a way that the supporting unit 2 can receive another processed piece.

The steps of picking up and releasing the pieces, as well as the lowering and raising movements of the base plates 2a of the units, 2 are repeated until the unit 2 in the feed station "A" is empty.

Once the unit 2 in the feed station "A" is empty and the one in the collecting station "R" is full of processed pieces, the conveyor 100 is rotated in such a way that the empty unit 2 occupies the collecting station "R" and a new unit 2 transporting a stack of raw pieces enters the feed station "A".

Advantageously, the operating method of the automatic storage system 200 is efficient and reliable.

The invention achieves the preset aims eliminating the drawbacks of the prior art. The conveyor 100 allows a plurality of types of pieces to be processed without the need to perform any structural change in the conveyor 100.

The conveyor 100 allows the pieces to be self-centred both at the moment of loading the stack of raw pieces on the units 2 and at the moment of releasing the processed pieces in the collecting station "R".

The automatic storage system 200 is versatile and adaptable to any processing machine of the production line.

The operating method of the automatic storage system 200 is reliable and efficient to deal with the production rates required.

## Claims

1. A conveyor (100) for transporting pieces in a production line, comprising:
- a carousel (1) rotatable about a vertical axis of rotation (X) and defining a closed feed path (C) for said pieces;
- a station (A) for feeding raw parts to a processing machine (M) set up along said closed feed path (C);
- a station (R) for collecting pieces processed by said processing machine (M) set up along the closed feed path (C);
- a plurality of units (2) angularly distributed on said carousel (1) and configured for each receiving a stack of raw pieces or a stack of processed pieces, preferably said pieces being circular or parallelepiped-shaped, **characterized in that** each of said units (2) extending along an axis of extension (Y) inclined away from and/or towards said axis of rotation (X) and comprising:
- a base plate (2a) configured to support the bottom of a stack of pieces, said base plate (2a) being movable along said axis of extension (Y) between a position distal from said carousel (1), in such a way as to release said raw pieces in said feed station (A), and a proximal position relative to said carousel (1) for receiving said pieces processed in said collecting station (R), preferably said base plate (2a) being movable up and down by an amount equal to a thickness of the pieces forming the stack;
- a pair of supporting elements (2b) extending along said axis of extension (Y) to define a movement guide for said base plate (2a), said supporting elements (2b) delimiting with the respective base plate (2a) a seat for containing a piece or a stack and acting in conjunction with said base plate (2a) to perform a self-centring of the piece or stack of pieces.

2. The conveyor (100) according to claim 1, wherein the supporting elements (2b) of said pair define a predetermined angle between each other, preferably said supporting elements (2b) defining an angle of between 60° and 120°, even more preferably equal to 90°.

3. The conveyor (100) according to claim 1 or 2, wherein said base plate (2a) has, in cross section, a substantially drip-type shape wherein a tip portion of said drip is at least partly received by said pair of supporting elements (2b) in such a way as to form two contact points for each piece of said stack of pieces resting on said base plate (2a).

4. The conveyor (100) according to any one of the preceding claims, comprising a control unit configured to drive said units (2) by moving said base plate (2a) between said distal position and said proximal position as a function of an operating parameter of a specific unit passing through said feed station (A) and/or through said collection station (R).

5. The conveyor (100) according to claim 4, also comprising a plurality of measuring devices (3) designed to detect said operating parameter of the specific unit (2) and to generate a signal representing said operating parameter to be sent to said control unit.

6. The conveyor (100) according to claim 4 or 5, wherein said operating parameter can be selected from:
- a presence or the absence of a stack of pieces on said unit (2), and/or
- a number of pieces of said stack, and/or
- a thickness of the pieces of said stack.

7. An automatic storage system (200) for loading and unloading pieces from a machine comprising:
- a conveyor (100) according to any one of the preceding claims;
- a supporting frame (4) extending above said conveyor (100) in such a way as to define an operating zone (Z1) in which there are said feed station (A) and said collecting station (R), and a control zone (Z2), opposite said operating zone (Z1) and accessible by an operator;
- a gripping arm (5) hinged to the supporting frame (4) and configured to move a plurality of raw pieces from the feed station (A) to the machine and to move a plurality of processed pieces from the machine to the collecting station (R), preferably said gripping arm (5) being hinged to the supporting frame (4) at a point along said axis of rotation (X) of the conveyor (100).

8. The automatic storage system (200) according to claim 7, comprising detection means configured to detect the presence or the absence of an operator in said control zone (Z2) in such a way as to inhibit or enable a rotation of said conveyor (100).

9. The automatic storage system (200) according to claim 7 or 8, wherein the gripping arm (4) is configured to move with a tilting motion between an operating position wherein it is aligned along said axis of extension (Y) and moved towards said unit (2) to manipulate said raw pieces or processed pieces, and a rest position in which it is moved away from the conveyor (100).

10. The automatic storage system (200) according to any one of claims 7 to 9, wherein said gripping arm (4) is also movable by translation along a direction parallel to the axis of rotation (X) of the conveyor (100) between an extracted position, wherein it is close to said conveyor (100), and a retracted position, wherein it is close to an upper portion of said supporting frame (4).

11. The automatic storage system (200) according to any one of claims 7 to 10, wherein said gripping arm (4) is also movable between said feed station (A) and said collecting station (R), preferably said gripping arm (4) being movable between said feed and collection stations (A, R) by means of a rotational motion.

12. A method for operating an automatic storage system (200) comprising the steps of:
- preparing an automatic storage system (200) according to any one of claims 7 to 11;
- preparing a stack of raw pieces on at least one unit (2) passing through said control zone (Z2);
- rotating said conveyor (100) to move said unit (2) in said operating zone (Z1) in such a way as to move said unit (2) in said feed station (A);
- picking up with said gripping arm (5) a raw piece from said stack to position said raw piece in the machine;
- releasing a processed piece from the machine using said gripping arm (5) and positioning said piece in a unit (2) positioned in said collecting station (R);
- repeating said steps of picking up and releasing until said unit (2) in the feed station (A) is empty;
- rotating said conveyor (100) in such a way that said empty unit (2) occupies said collecting station (R) and a new unit (2) transporting a stack of raw pieces enters said feed station (A).

## Patentansprüche

1. Förderer (100) zum Transportieren von Teilen in einer Produktionsstrecke, umfassend:
- ein Karussell (1), das um eine vertikale Rotationsachse (X) drehbar ist und einen geschlossenen Zuführungsweg (C) für diese Teile definiert;
- eine Station (A) zum Zuführen von Rohteilen zu einer Bearbeitungsmaschine (M), die entlang des geschlossenen Zuführungswegs (C) eingerichtet ist;
- eine Station (R) zum Sammeln der von der Bearbeitungsmaschine (M), die entlang des geschlossenen Zuführungswegs (C) eingerichtet ist, bearbeiteten Teile;
- eine Vielzahl von Einheiten (2), die winkelig auf dem Karussell (1) verteilt und so ausgelegt sind, dass eine jede einen Stapel von Rohteilen oder einen Stapel von bearbeiteten Teilen empfängt, wobei die Teile vorzugsweise kreisförmig oder parallelepipedförmig sind, **dadurch gekennzeichnet, dass** sich eine jede der Einheiten (2) entlang einer Ausdehnungsachse (Y) geneigt wegführend von und/oder hinführend zur Rotationsachse (X) erstreckt, und umfassend:
- eine Basisplatte (2a), die ausgelegt ist, um den Boden eines Stapels von Teilen zu tragen, wobei die Basisplatte (2a) entlang der Ausdehnungsachse (Y) zwischen einer distalen Position vom Karussell (1), sodass die Rohteile in die Zuführungsstation (A) freigegeben werden, und einer proximalen Position relativ zum Karussell (1), um die bearbeiteten Teile in der Sammelstation (R) zu empfangen, bewegbar ist, wobei die Basisplatte (2a) vorzugsweise um eine Menge gleich einer Dicke der den Stapel formenden Teile nach oben und nach unten bewegbar ist;
- ein Paar von Trageelementen (2b), die sich entlang der Ausdehnungsachse (Y) erstrecken, um eine Bewegungsführung für die Basisplatte (2a) zu definieren, wobei die Trageelemente (2b) mit der jeweiligen Basisplatte (2a) einen Sitz zum Enthalten eines Teils oder eines Stapels begrenzen und in Verbindung mit der Basisplatte (2a) wirken, um eine Selbstzentrierung des Teils oder des Teilestapels durchzuführen.

2. Förderer (100) nach Anspruch 1, wobei die Trageelemente (2b) des Paars einen vorbestimmten Winkel zwischen ihnen definieren und die Trageelemente (2b) vorzugsweise einen Winkel zwischen 60° und 120°, noch besser gleich 90°, definieren.

3. Förderer (100) nach Anspruch 1 oder 2, wobei die Basisplatte (2a) im Querschnitt im Wesentlichen eine Ablauftypform aufweist, wobei ein Spitzenabschnitt des Ablaufs mindestens teilweise vom Paar von Trageelementen (2b) aufgenommen wird, sodass zwei Kontaktpunkte für ein jedes Teil des Teilestapels, ruhend auf der Basisplatte (2a), geformt werden.

4. Förderer (100) nach einem der vorhergehenden Ansprüche, umfassend eine Steuereinheit, die ausgelegt ist, um die Einheiten (2) anzutreiben, indem die Basisplatte (2a) zwischen der distalen Position und der proximalen Position als eine Funktion eines Betriebsparameters einer spezifischen Einheit, die durch die Zuführungsstation (A) und/oder durch die Sammelstation (R) führt, bewegt wird.

5. Förderer (100) nach Anspruch 4, zudem umfassend eine Vielzahl von Messvorrichtungen (3), die ausgestaltet sind, um den Betriebsparameter der spezifischen Einheit (2) zu erkennen und ein Signal zu generieren, das den an die Steuereinheit zu sendenden Betriebsparameter darstellt.

6. Förderer (100) nach Anspruch 4 oder 5, wobei der Betriebsparameter ausgewählt werden kann aus
- einer Anwesenheit oder Abwesenheit eines Teilestapels auf der Einheit (2) und/oder
- einer Anzahl von Teilen des Stapels und/oder
- einer Dicke der Teile des Stapels.

7. Automatisches Lagersystem (200) zum Laden und Entladen von Teilen von einer Maschine, umfassend:
- einen Förderer (100) nach einem der vorhergehenden Ansprüche;
- einen Tragerahmen (4), der sich über dem Förderer (100) erstreckt, sodass eine Betriebszone (Z1) definiert wird, in der sich die Zuführungsstation (A) und die Sammelstation (R) befinden, und eine Kontrollzone (Z2), die der Betriebszone (Z1) entgegengesetzt und für einen Bediener zugänglich ist;
- einen Greifarm (5), der gelenkig am Tragerahmen (4) befestigt und ausgelegt ist, um eine Vielzahl von Rohteilen von der Zuführungsstation (A) zu einer Maschine zu bewegen und eine Vielzahl von bearbeiteten Teilen von der Maschine zur Sammelstation (R) zu bewegen, wobei der Greifarm (5) vorzugsweise gelenkig am Tragerahmen (4) an einer Stelle entlang der Rotationsachse (X) des Förderers (100) befestigt ist.

8. Automatisches Lagersystem (200) nach Anspruch 7, umfassend Erkennungsmittel, die ausgelegt sind, um die Anwesenheit oder Abwesenheit eines Bedieners in der Kontrollzone (Z2) zu erkennen, sodass eine Rotation des Förderers (100) gehemmt oder ermöglicht wird.

9. Automatisches Lagersystem (200) nach Anspruch 7 oder 8, wobei der Greifarm (4) ausgelegt ist, um sich mit einer Kippbewegung zwischen einer Betriebsposition, in der er entlang der Ausdehnungsachse (Y) fluchtend angeordnet ist und hinführend zur Einheit (2) bewegt wird, um die Rohteile oder bearbeiteten Teile zu handhaben, und einer Ruheposition, in der er wegführend vom Förderer (100) bewegt wird, bewegt wird.

10. Automatisches Lagersystem (200) nach einem der Ansprüche 7 bis 9, wobei der Greifarm (4) auch per Verschiebung entlang einer Richtung parallel zur Rotationsachse (X) des Förderers (100) zwischen einer ausgefahrenen Position, in der er in der Nähe des Förderers (100) ist, und einer eingefahrenen Position, in der er in der Nähe eines oberen Abschnitts des Tragerahmens (4) ist, bewegbar ist.

11. Automatisches Lagersystem (200) nach einem der Ansprüche 7 bis 10, wobei der Greifarm (4) auch zwischen der Zuführungsstation (A) und der Sammelstation (R) bewegbar ist, wobei der Greifarm (4) vorzugsweise zwischen der Zuführungs- und der Sammelstation (A, R) mittels einer rotatorischen Bewegung bewegbar ist.

12. Verfahren zum Bedienen eines automatischen Lagersystems (200), umfassend die folgenden Schritte:
- Vorbereiten eines automatischen Lagersystems (200) nach einem der Ansprüche 7 bis 11;
- Vorbereiten eines Stapels von Rohteilen auf mindestens einer Einheit (2), führend durch die Kontrollzone (Z2);
- Drehen des Förderers (100), um die Einheit (2) in die Betriebszone (Z1) zu bewegen, sodass die Einheit (2) in die Zuführungsstation (A) bewegt wird;
- Aufnehmen eines Rohteils vom Stapel mit dem Greifarm (5), um das Rohteil in der Maschine zu positionieren;
- Freigeben eines bearbeiteten Teils von der Maschine unter Nutzung des Greifarms (5) und Positionieren des Teils in einer Einheit (2), die in der Sammelstation (R) positioniert ist;
- Wiederholen der Schritte zum Aufnehmen und Freigeben, bis die Einheit (2) in der Zuführungsstation (A) leer ist;
- Drehen des Förderers (100), sodass die leere Einheit (2) die Sammelstation (R) besetzt und eine neue Einheit (2), die einen Stapel von Rohteilen transportiert, in die Zuführungsstation (A) eintritt.

## Revendications

1. Convoyeur (100) pour le transport de pièces dans une ligne de production, comprenant :
- un carrousel (1) rotatif autour d'un axe de rotation vertical (X) et définissant un chemin d'alimentation fermé (C) pour lesdites pièces ;
- une station (A) pour alimenter en pièces brutes une machine de traitement (M) mise en place le long dudit chemin d'alimentation fermé (C) ;
- une station (R) pour collecter des pièces traitées par ladite machine de traitement (M) mis en place le long du chemin d'alimentation fermé (C) ;
- une pluralité d'unités (2) réparties angulairement sur ledit carrousel (1) et configurées pour recevoir chacune une pile de pièces brutes ou une pile de pièces traitées, de préférence lesdites pièces étant de forme circulaire ou parallélépipédique, **caractérisé en ce que** chacune desdites unités (2) s'étendant le long d'un axe d'extension (Y) incliné à l'opposé et/ou vers ledit axe de rotation (X) et comprenant :
- une plaque de base (2a) configurée pour supporter le fond d'une pile de pièces, ladite plaque de base (2a) étant mobile le long dudit axe d'extension (Y) entre une position distale dudit carrousel (1), de manière à libérer lesdites pièces brutes dans ladite station d'alimentation (A), et une position proximale par rapport audit carrousel (1) pour recevoir lesdites pièces traitées dans ladite station de collecte (R), de préférence ladite plaque de base (2a) étant mobile en haut et en bas d'une quantité égale à une épaisseur des pièces formant la pile ;
- une paire d'éléments de support (2b) s'étendant le long dudit axe d'extension (Y) pour définir un guide de mouvement pour ladite plaque de base (2a), lesdits éléments de support (2b) délimitant avec la plaque de base respective (2a) un siège pour contenir une pièce ou une pile et agissant conjointement avec ladite plaque de base (2a) pour effectuer un autocentrage de la pièce ou de la pile de pièces.

2. Convoyeur (100) selon la revendication 1, dans lequel les éléments de support (2b) de ladite paire définissent un angle prédéterminé entre eux, de préférence lesdits éléments de support (2b) définissant un angle compris entre 60° et 120°, encore plus préférablement égal à 90°.

3. Convoyeur (100) selon la revendication 1 ou 2, dans lequel ladite plaque de base (2a) a, en section transversale, une forme sensiblement de type goutte-à-goutte dans laquelle une portion de pointe dudit goutte-à-goutte est au moins partiellement reçue par ladite paire d'éléments de support (2b) de manière à former deux points de contact pour chaque pièce de ladite pile de pièces reposant sur ladite plaque de base (2a).

4. Convoyeur (100) selon l'une quelconque des revendications précédentes, comprenant une unité de commande configurée pour entraîner lesdites unités (2) en déplaçant ladite plaque de base (2a) entre ladite position distale et ladite position proximale en fonction d'un paramètre de fonctionnement d'une unité spécifique passant par ladite station d'alimentation (A) et/ou par ladite station de collecte (R).

5. Convoyeur (100) selon la revendication 4, comprenant également une pluralité de dispositifs de mesure (3) conçus pour détecter ledit paramètre de fonctionnement de l'unité spécifique (2) et pour générer un signal représentant ledit paramètre de fonctionnement à envoyer à ladite unité de commande.

6. Convoyeur (100) selon la revendication 4 ou 5, dans lequel ledit paramètre de fonctionnement peut être choisi parmi :
- la présence ou l'absence d'une pile de pièces sur ladite unité (2), et/ou
- un certain nombre de pièces de ladite pile, et/ou
- une épaisseur des morceaux de ladite pile.

7. Système de stockage automatique (200) pour charger et décharger des pièces d'une machine, comprenant :
- un convoyeur (100) selon l'une quelconque des revendications précédentes ;
- un cadre de support (4) s'étendant au-dessus dudit convoyeur (100) de manière à définir une zone de fonctionnement (Z1) dans laquelle se trouvent ladite station d'alimentation (A) et ladite station de collecte (R), et une zone de contrôle (Z2), opposée à ladite zone de fonctionnement (Z1) et accessible par un opérateur ;
- un bras de préhension (5) articulé sur le cadre de support (4) et configuré pour déplacer une pluralité de pièces brutes de la station d'alimentation (A) vers la machine et pour déplacer une pluralité de pièces traitées de la machine vers la station de collecte (R), de préférence ledit bras de préhension (5) étant articulé sur le cadre de support (4) en un point le long dudit axe de rotation (X) du convoyeur (100).

8. Système de stockage automatique (200) selon la revendication 7, comprenant des moyens de détection configurés pour détecter la présence ou l'absence d'un opérateur dans ladite zone de contrôle (Z2) de manière à inhiber ou à permettre une rotation dudit convoyeur (100) .

9. Système de stockage automatique (200) selon la revendication 7 ou 8, dans lequel le bras de préhension (4) est configuré pour se déplacer avec un mouvement d'inclinaison entre une position de fonctionnement dans laquelle il est aligné le long dudit axe d'extension (Y) et déplacé vers ladite unité (2) pour manipuler lesdites pièces brutes ou les pièces traitées, et une position de repos dans laquelle il est éloigné du convoyeur (100).

10. Système de stockage automatique (200) selon l'une quelconque des revendications 7 à 9, dans lequel ledit bras de préhension (4) est également mobile par translation le long d'une direction parallèle à l'axe de rotation (X) du convoyeur (100) entre une position extraite, dans laquelle il est proche dudit convoyeur (100), et une position rétractée, dans laquelle il est proche d'une portion supérieure dudit cadre de support (4).

11. Système de stockage automatique (200) selon l'une quelconque des revendications 7 à 10, dans lequel ledit bras de préhension (4) est également mobile entre ladite station d'alimentation (A) et ladite station de collecte (R), de préférence ledit bras de préhension (4) étant mobile entre lesdites stations d'alimentation et de collecte (A, R) au moyen d'un mouvement de rotation.

12. Procédé pour faire fonctionner un système de stockage automatique (200), comprenant les étapes de :
- préparer un système de stockage automatique (200) selon l'une quelconque des revendications 7 à 11 ;
- préparer une pile de pièces brutes sur au moins une unité (2) traversant ladite zone de contrôle (Z2) ;
- faire tourner ledit convoyeur (100) pour déplacer ladite unité (2) dans ladite zone de fonctionnement (Z1) de manière à déplacer ladite unité (2) dans ladite station d'alimentation (A) ;
- prélever avec ledit bras de préhension (5) une pièce brute de ladite pile pour positionner ladite pièce brute dans la machine ;
- libérer une pièce traitée de la machine à l'aide dudit bras de préhension (5) et positionner ladite pièce dans une unité (2) positionnée dans ladite station de collecte (R) ;
- répéter lesdites étapes de prélever et de libérer jusqu'à ce que ladite unité (2) dans la station d'alimentation (A) soit vide ;
- faire tourner ledit convoyeur (100) de telle sorte que ladite unité vide (2) occupe ladite station de collecte (R) et qu'une nouvelle unité (2) transportant une pile de pièces brutes entre dans ladite station d'alimentation (A).
